# EUROPEAN PATENT SPECIFICATION

(11) **EP 3 425 176 B1**
(45) Date of publication and mention of the grant of the patent: **27.05.2020**
(21) Application number: 17773625.3
(22) Date of filing: 01.02.2017
(51) Int. Cl.: F01K 23/10, F01D 15/04, F01D 17/00, F02G 5/02, F01K 13/02, F01K 23/06, F22B 37/26, F01K 7/16

(54) **WASTE HEAT RECOVERY DEVICE, INTERNAL COMBUSTION SYSTEM, SHIP, AND CONTROL METHOD FOR WASTE HEAT RECOVERY DEVICE**
ABWÄRMERÜCKGEWINNUNGSVORRICHTUNG, VERBRENNUNGSSYSTEM, SCHIFF UND STEUERUNGSVERFAHREN FÜR EINE ABWÄRMERÜCKGEWINNUNGSVORRICHTUNG
DISPOSITIF DE RÉCUPÉRATION DE CHALEUR PERDUE, SYSTÈME DE COMBUSTION INTERNE, NAVIRE, ET PROCÉDÉ DE COMMANDE DE DISPOSITIF DE RÉCUPÉRATION DE CHALEUR PERDUE

(30) Priority: 31.03.2016 JP 2016071992
(43) Date of publication of application: 09.01.2019
(73) Proprietor: Mitsubishi Heavy Industries Marine Machinery & Equipment Co., Ltd., Nagasaki-shi Nagasaki 8508610 (JP)
(72) Inventor: ICHIKI, Yoshihiro, Nagasaki-shi Nagasaki 850-8610 (JP)
(74) Representative: Hoffmann Eitle
(86) International application number: PCT/JP2017/003544
(87) International publication number: WO 2017/169076

(56) References cited:
- JP-A- H07 229 405
- JP-A- H07 229 405
- JP-A- H08 200 016
- JP-A- H10 103 020
- JP-A- H10 103 020
- JP-A- S58 148 206
- JP-A- 2007 001 339
- JP-A- 2013 151 887
- JP-A- 2015 081 569
- JP-A- 2015 232 294
- JP-A- 2015 232 294
- US-A- 4 576 124

## Description

### [Technical Field]

The present invention relates to a waste heat recovery unit, an internal combustion engine system, and a ship, and a method of controlling the waste heat recovery unit.

### [Background Art]

An exhaust heat recovery apparatus is known which includes an exhaust gas economizer for generating the main steam using the exhaust gas of the diesel engine, a steam separator to which the main steam is guided from the exhaust gas economizer, and a steam turbine driven by the main steam (see the Publication of Japanese Patent No. 5374465, for example).

The waste heat recovery unit disclosed in Patent Literature 1 includes a steam dump valve connected to a steam separator. The steam dump valve is fully open when the pressure of the main steam obtained by a pressure transmitter becomes greater than or equal to a predetermined value. This prevents the pressure of the main steam in the steam separator from becoming greater than or equal to the predetermined value and thus causing troubles in the steam separator or the like.

Further waste heat recovery units are known from JP H07 229405 A or JP H10 103020 A. JP 2015 232294 A represents the closest prior art.

### [Summary of Invention]

### [Technical Problem]

For example, in such a waste heat recovery unit disclosed in the Publication of Japanese Patent No. 5374465, the steam turbine is actuated upon the start of the supply of the main steam from the steam separator. In this case, rapidly increasing the degree of opening of the regulating valve that regulates the flow rate of the main steam guided from the steam separator to the steam turbine rapidly lowering the pressure of the main steam while the temperature of the water in the steam separator is kept high. Accordingly, the pressure of the water in the steam separator falls below the saturated vapor pressure at the temperature of the water, and cavitation (a physical phenomenon in which bubbles occur and disappear in a liquid) occurs. When the cavitation occurs, the discharge pressure of the pump is lowered by the bubbles generated at the inlet of the pump that pumps out water from the steam separator to the exhaust gas economizer, and troubles, such as corrosion of the pump, occur.

An effective way of preventing the occurrence of cavitation is to limit the amount of increase per unit time in the degree of opening of the regulating valve that regulates the flow rate of the main steam, to at or below a certain level to suppress a pressure fluctuation per unit time in the main steam in the steam separator. This prevents the pressure of water in the steam separator from falling below the saturated vapor pressure at the temperature of the water.

However, limiting the amount of increase per unit time in the degree of opening of the regulating valve extends the start-up time of the steam turbine (the time in which the degree of opening of the regulating valve changes from the fully closed state to the fully opened state). In particular, the start-up time of the steam turbine is long when the set pressure at which the steam dump valve is open is set to a constant value independent of the output of the diesel engine. This is because the set pressure for the steam dump valve is set relatively high so that the steam dump valve does not open during the normal operation of the steam turbine and a waste of steam is avoided. When the set pressure for the steam dump valve is high and the pressure of the main steam in the steam separator is thus kept high, the start-up time of the steam turbine is long.

An object of the present invention, which has been made in such a background, is to provide a waste heat recovery unit, an internal combustion engine system and a ship, and a method of controlling the waste heat recovery unit, in which the start-up time of the steam turbine can be shortened even when the degree of opening the regulating valve is controlled so that a fluctuation per unit time in the pressure of the main steam in the steam separator is less than or equal to a predetermined pressure.

### [Solution to Problem]

This object is solved by a waste heat recovery unit and a method with the features of claims 1 and 6, an internal combustion engine with the features of claim 4 and a ship with the features of claim 5.

To solve the above-described problem, a waste heat recovery unit, an internal combustion engine system and a ship, and a method of controlling the waste heat recovery unit according to the present invention use the following solutions.

A waste heat recovery unit according to one aspect of the present invention includes: a steam separator to which main steam generated by recovering heat from exhaust gas exhausted from an internal combustion engine is guided; a steam turbine that is driven by the main steam guided from the steam separator; a regulating valve that regulates the flow rate of the main steam flowing from the steam separator to the steam turbine; a steam dump valve that is connected to the steam separator; an output unit that outputs a first pressure that is the pressure of the main steam in the steam separator; and a control unit that controls the steam dump valve so that the steam dump valve is opened when the pressure of the main steam output by the output unit is greater than or equal to a set pressure, and the steam dump valve is closed when the pressure of the main steam output by the output unit is less than the set pressure. The control unit sets the set pressure to a value greater than or equal to the first pressure and less than or equal to a second pressure obtained by adding a constant pressure to the first pressure, the set pressure varying according to the first pressure.

In the waste heat recovery unit according to one aspect of the present invention, the pressure of the main steam in the steam separator is kept equal to the first pressure output by the output unit or in a range of lower than or equal to the second pressure to which the constant pressure is added. The pressure of the main steam in the steam separator varies according to the output of the internal combustion engine, and the control unit appropriately sets the set pressure for the steam dump valve according to the pressure of the main steam. Accordingly, the pressure of the main steam in the steam separator is kept within an appropriate range according to the output of the internal combustion engine. Consequently, a phenomenon in which the pressure of the main steam in the steam separator is kept high with respect to the output of the internal combustion engine is prevented unlike in the case where the set pressure for the steam dump valve is set to a constant value independently of the output of the internal combustion engine. Hence, the start-up time of the steam turbine can be shortened even in the case where the degree of opening of the regulating valve is controlled so that a fluctuation per unit time in the pressure of the main steam in the steam separator is less than or equal to a predetermined pressure.

In the waste heat recovery unit according to present invention, the control unit controls the degree of opening of the governor valve so that a fluctuation per unit time in the pressure of the main steam output by the output unit is less than or equal to a predetermined pressure.

Thus, a fluctuation per unit time in the pressure of the main steam in the steam separator becomes lower than or equal to a predetermined pressure, so that the pressure of water in the steam separator is kept at a temperature greater than or equal to the saturated vapor pressure depending on the temperature of the water, thereby suppressing the occurrence of cavitation.

In the waste heat recovery unit according to one aspect of the present invention, the output unit may be a pressure transmitter that detects the pressure of the main steam.

Thus, the set pressure for the steam dump valve can be set as appropriate according to the pressure of the main steam detected by the pressure transmitter.

In the waste heat recovery unit according to one aspect of the present invention, the output unit may output, based on table information showing a correspondence between an output of the internal combustion engine and a design steam pressure that varies according to the output, the design steam pressure corresponding to the output of the internal combustion engine as the first pressure.

Thus, for example, even when the pressure of the main steam cannot be directly detected, for example, during the stop of the steam turbine, the design steam pressure corresponding to the current output of the internal combustion engine can be set as appropriate referring to table information prepared in advance.

An internal combustion engine system according to one aspect of the present invention includes an internal combustion engine and the above-described waste heat recovery unit.

In the provided internal combustion engine system, which includes the above-described waste heat recovery unit, the start-up time of the steam turbine can be shortened even in the case where the degree of opening of the regulating valve is controlled so that a fluctuation per unit time in the pressure of the main steam in the steam separator is less than or equal to a predetermined pressure.

A ship of the present invention includes the above-described internal combustion engine system.

In the provided ship, which includes the above-described internal combustion engine system, the start-up time of the steam turbine can be shortened even in the case where the degree of opening of the regulating valve is controlled so that a fluctuation per unit time in the pressure of the main steam in the steam separator is less than or equal to a predetermined pressure.

A method of controlling a waste heat recovery unit according to one aspect of the present invention is a method of controlling a waste heat recovery unit including a steam turbine driven by main steam generated by recovering heat from exhaust gas exhausted from an internal combustion engine, the method including the steps of: an output step of outputting a first pressure that is the pressure of the main steam guided to a steam separator; and a control step of controlling a steam dump valve connected to the steam separator so that the steam dump valve is opened when the pressure of the main steam output in the output step is greater than or equal to a set pressure, and the steam dump valve is closed when the pressure of the main steam detected in the output step is less than the set pressure. The control step sets the set pressure to a value greater than or equal to the first pressure and less than or equal to a second pressure obtained by adding a constant pressure to the first pressure, the set pressure varying according to the first pressure.

### [Advantageous Effects of Invention]

The present invention provides a waste heat recovery unit, an internal combustion engine system and a ship, and a method of controlling the waste heat recovery unit, in which the start-up time of the steam turbine can be shortened even when the degree of opening the regulating valve is controlled so that a fluctuation per unit time in the pressure of the main steam in the steam separator is less than or equal to a predetermined pressure.

### [Brief Description of Drawings]

[Fig. 1]

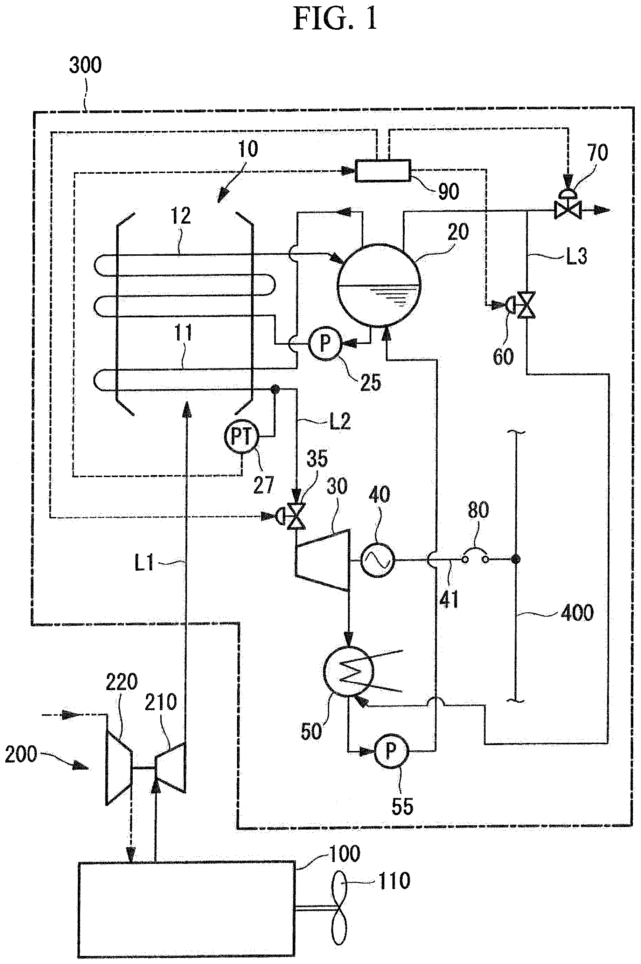

   Fig. 1 is a schematic configuration diagram showing an embodiment of an internal combustion engine system.
[Fig. 2]

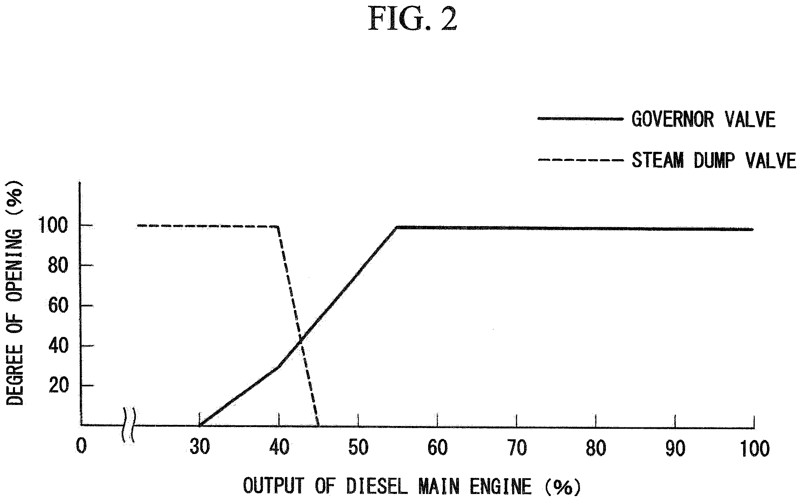

   Fig. 2 is a diagram showing the degree of opening of a governor valve and a steam dump valve with respect to the output of the diesel main engine.
[Fig. 3]

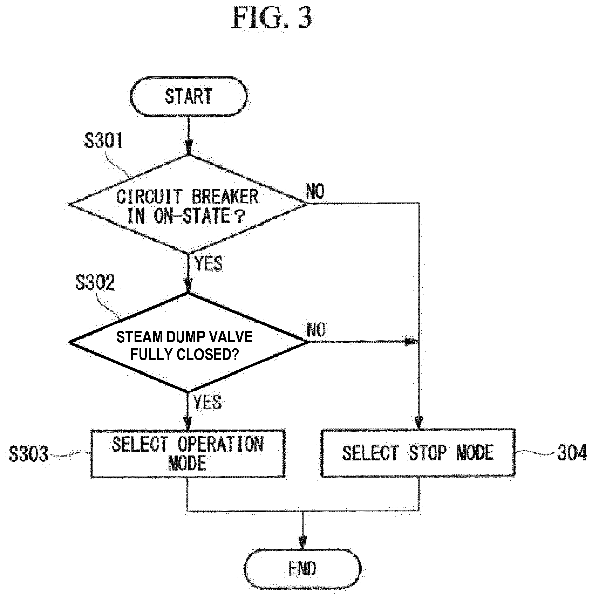

   Fig. 3 is a flow chart showing a process of setting a set pressure for the steam dump valve through a control unit shown in Fig. 1.
[Fig. 4]

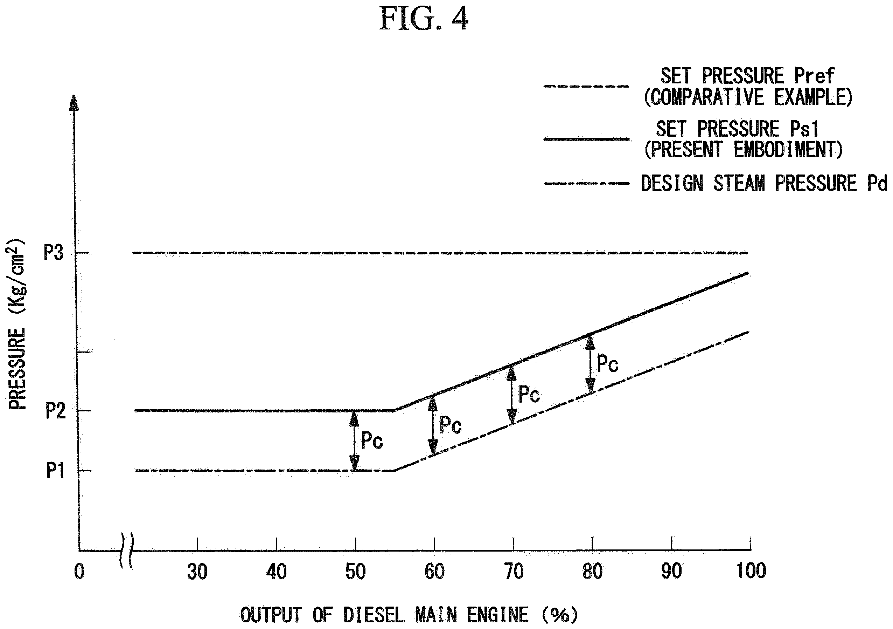

   Fig. 4 is a diagram showing set pressures for the steam dump valve set with respect to the output of a diesel main engine during operation of a steam turbine.
[Fig. 5]

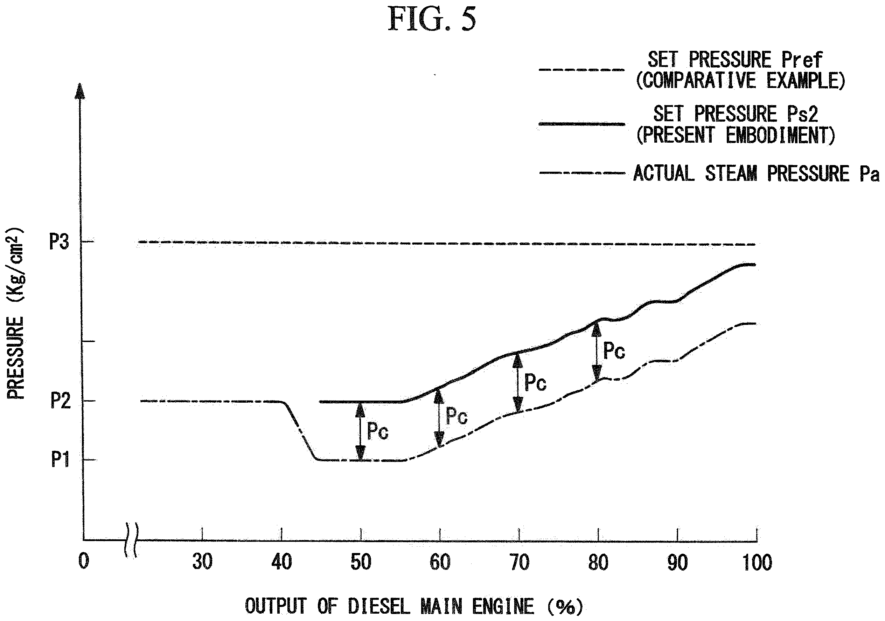

   Fig. 5 is a diagram showing the set pressures for the steam dump valve set with respect to the output of the diesel main engine during the stop of the steam turbine.

### [Description of Embodiments]

Embodiments of the present invention will now be described with reference to the accompanying drawings.

The diesel engine system (internal combustion engine system) installed in a ship shown in Fig. 1 includes a diesel main engine (internal combustion engine) 100, a turbocharger 200 driven by the exhaust gas of the diesel main engine 100, and a waste heat recovery unit 300 for recovering the heat exhausted from the diesel main engine 100 and generating electric power.

The diesel main engine 100 drives a propeller 110 for ship propulsion. Compressed air supplied to the diesel main engine 100 is guided from the turbocharger 200 which is driven by the exhaust gas of the diesel main engine 100.

The turbocharger 200 includes a turbine 210 and a compressor 220 which are coaxially provided. The turbine 210 is designed to be rotated by the exhaust gas from the diesel main engine 100. When the turbine 210 is driven, the coaxially provided compressor 220 rotates and compresses the air.

The downstream end of the turbine 210 is connected to an exhaust gas economizer 10, which will be described later, via an exhaust gas pipe L1.

The waste heat recovery unit 300 includes an exhaust gas economizer 10, a steam separator 20, a boiler water re-circulation pump 25, a pressure transmitter (output unit) 27, a steam turbine 30, a governor valve (regulating valve) 35, a generator 40, a condenser 50, a condensate pump 55, a steam dump valve 60, a pressure control valve for service steam 70, a circuit breaker 80, and a control unit 90.

The exhaust gas economizer 10 is a device for recovering heat from the exhaust gas from the diesel main engine 100, thereby generating superheated steam serving as the main steam for driving the steam turbine 30. The exhaust gas economizer 10 has a superheater 11 and an evaporator 12 in the flue. The superheater 11 and the evaporator 12 are composed of heat transfer tubes sequentially mounted in parallel from the lower side toward the upper side (from the upstream side to the downstream side of the exhaust gas flow) in the exhaust gas economizer 10. High-temperature exhaust gas flows in the flue of the exhaust gas economizer 10, and is released into the atmosphere through a chimney (not shown in the drawing) connected to the downstream end of the flue. Saturated steam is guided from an upper part of the steam separator 20 to the superheater 11. Water is guided from a lower part of the steam separator 20 to the evaporator 12 through a boiler water re-circulation pump 25.

The steam separator 20 is a device for dividing moist steam, which contains water guided from the evaporator 12, into steam and water. In the steam separator 20, the contained water and steam are vertically separated. The steam separator 20 is supplied with water from the condenser 50 through the condensate pump 55. Water in the steam separator 20 is guided to the evaporator 12 through the boiler water re-circulation pump 25. Moisture steam, which contains water guided from the evaporator 12, is guided to the steam separator 20 and is divided into water and steam there. Divided saturated steam is guided to the superheater 11 and becomes superheated steam. Superheated steam generated in the superheater 11 is guided to the steam turbine 30 through a superheated steam supply pipe L2.

The pressure transmitter 27 is provided in the superheated steam supply pipe L2 to detect the pressure of the superheated steam in the superheated steam supply pipe L2. The pressure transmitter 27 shown in Fig. 1 is supposed to detect the pressure of the superheated steam guided from the superheater 11, but the pressure of the superheated steam is substantially equivalent to the pressure of the steam in the steam separator 20. Accordingly, the pressure transmitter 27 is supposed to output the pressure (first pressure) of the steam in the steam separator 20.

Note that the pressure transmitter 27 for detecting the superheated steam pressure may be installed in any position in which it can detect the pressure of the superheated steam generated by the exhaust gas economizer 10.

The governor valve 35 is provided upstream from the steam turbine 30, and a main stop valve (not shown in the drawing) is further provided upstream from the governor valve 35. When the steam turbine 30 is in operation, the main stop valve is opened, and when the steam turbine 30 is not in operation, the main stop valve is closed. The governor valve 35 is a device for regulating the flow rate of the superheated steam flowing from the steam separator 20 to the steam turbine 30 when operating the steam turbine 30. The degree of opening of the governor valve 35 is controlled by the control unit 90.

The steam turbine 30 is a device designed to be rotated by superheated steam guided through the governor valve 35. The rotational output given to the rotary shaft (not shown in the drawing) of the steam turbine 30 is transferred to the generator 40 which is coupled to the rotary shaft.

The generator 40 is driven by the rotational output transferred from the steam turbine 30 and generates electric power. The electrical output of the generator 40 is guided to an inboard electrical power system 400 via an output wire 41 and the circuit breaker 80. The control unit 90 performs switching between the supply state in which the circuit breaker 80 connects the output wire 41 and the inboard electrical power system 400 (on-state) and the supply stop state in which the circuit breaker 80 blocks the connection between the output wire 41 and the inboard electrical power system 400 (off-state). When the frequency of electric power generated by the generator 40 reaches the system frequency of the inboard electrical power system 400, the control unit 90 switches the circuit breaker 80 from the off-state to the on-state.

The condenser 50 is a device for condensing and liquefying the steam that has been used in the steam turbine 30 and the steam guided from the steam dump valve 60. The condensate water liquefied by the condenser 50 is guided to the steam separator 20 through the condensate pump 55.

The steam dump valve 60 is connected to an upper part of the steam separator 20 via a steam pipe L3. The steam dump valve 60 is controlled by the control unit 90 so that it is opened when the pressure of the steam in the steam separator 20 (first pressure) is greater than or equal to a set pressure, and it is closed when the pressure of the steam in the steam separator 20 is less than the set pressure. The set pressure for the steam dump valve 60 is set by the control unit 90. The steam dump valve 60 guides excessive steam to the condenser 50 so that the pressure of the steam in the steam pipe L3, i.e., the steam in the steam separator 20 is less than the set pressure.

The pressure control valve for service steam 70 is connected to an upper part of the steam separator 20 via the steam pipe L3. The pressure control valve for service steam 70 bleeds the steam in the steam separator 20 and supplies it as inboard marine steam. The degree of opening of the pressure control valve for service steam 70 is controlled by the control unit 90.

The control unit 90 is a device for controlling the components of the waste heat recovery unit 300. A pressure signal output by the pressure transmitter 27 is transmitted to the control unit 90. The control unit 90 transmits a control signal to the governor valve 35, the steam dump valve 60, and the pressure control valve for service steam 70, thereby controlling the degrees of opening of these valves.

The control unit 90 sets a set pressure Ps for the steam dump valve 60 and controls the steam dump valve 60 so that it is opened when the pressure of the superheated steam output by the pressure transmitter 27 is greater than or equal to the set pressure Ps, and is closed when the pressure of the superheated steam output by the pressure transmitter 27 is less than the set pressure Ps. A method of setting the set pressure Ps for the steam dump valve 60 through the control unit 90 will be described later.

Note that the control unit 90 is composed of, for example, a central processing unit (CPU), a random access memory (RAM), a read only memory (ROM), or a computer-readable storage medium. A sequence of processing for implementing each function is stored in a storage medium in the form of, for example, a program, and this program is read by a CPU into a RAM or the like so that information is subjected to processing and operations, thereby implementing each function. Note that the program may be pre-installed in the ROM or other storage media, may be provided in the state of being stored in a computer-readable storage medium, or may be delivered via a wired or wireless communication means. The computer-readable storage medium is, for example, a magnetic disk, a magnetooptical disk, a CD-ROM, a DVD-ROM, or a semiconductor memory.

A method of controlling the above-described internal combustion engine system will now be explained.

When the diesel main engine 100 starts to operate, compressed air compressed in the turbocharger 200 is supplied to the diesel main engine 100 and is combusted with a fuel, which is not shown in the drawing, in the cylinder. Exhaust gas occurring after the combustion is performed in the diesel main engine 100 is guided to the exhaust gas economizer 10 through the turbine 210 of the turbocharger 200 and then the exhaust gas pipe L1. Exhaust gas exchanges heat with the superheater 11 and the evaporator 12 when passing through the exhaust gas economizer 10. Water guided to the evaporator 12 becomes moist steam due to heat exchange with exhaust gas. This moist steam is guided to the steam separator 20 where water is separated therefrom, and then is guided to the superheater 11 of the exhaust gas economizer 10. Steam guided to the superheater 11 becomes superheated steam due to heat exchange with exhaust gas.

Superheated steam generated in the superheater 11 is guided to the superheated steam supply pipe L2. Superheated steam guided to the superheated steam supply pipe L2 is supplied to the steam turbine 30 through the main stop valve (not shown in the drawing) and the governor valve 35. The steam turbine 30 is rotated by the guided steam, and the rotational output is transferred to the generator 40. The generator 40 generates electric power using the rotational output from the steam turbine 30 and supplies the power generation output to the inboard electrical power system 400 via the output wire 41 and the circuit breaker 80.

The control of the degrees of opening of the governor valve 35 and the steam dump valve 60 through the control unit 90 will now be explained.

When the diesel main engine 100 starts to operate and the pressure of the steam in the steam separator 20 reaches the set pressure Ps for the steam dump valve 60, the control unit 90 opens the steam dump valve 60 so that the pressure of the steam in the steam separator 20 is less than the set pressure Ps.

As shown in Fig. 2, the control unit 90 maintains a degree of opening of the steam dump valve 60 of 100% so that it is fully opened, until the output of the diesel main engine 100 (the proportion of the output when the maximum output is 100%) reaches 40%. This is because when the output of the diesel main engine 100 is less than 30%, the governor valve 35 is closed, the steam is not guided from the steam separator 20 to the steam turbine 30, and the pressure of the steam in the steam separator 20 reaches the set pressure for the steam dump valve 60.

On the other hand, when the output of the diesel main engine 100 exceeds 40%, the control unit 90 gradually decreases the degree of opening of the steam dump valve 60 in accordance with an increase in the output of the diesel main engine 100. The control unit 90 keeps a degree of opening of the steam dump valve 60 of 0% so that it is fully closed, in the region in which the output of the diesel main engine 100 is greater than or equal to 45%.

Note that the example in Fig. 2 shows the degree of opening of the steam dump valve 60 in a normal operating state in which the sudden stop or the like of the steam turbine 30 does not occur. If the sudden stop or the like of the steam turbine 30 occurs and the pressure of the steam in the steam separator 20 rapidly rises, the steam dump valve 60 is opened even in the region in which the output of the diesel main engine 100 is greater than or equal to 45%.

When the output of the diesel main engine 100 reaches a predetermined output (30% in the example shown in Fig. 2), the control unit 90 gradually increases the degree of opening of the governor valve 35 from 0% at which it is fully closed.

Here, the control unit 90 controls the governor valve 35 so as to limit the amount of increase per minute (unit time) in the degree of opening to less than or equal to a certain amount. This is aimed at limiting the amount of reduction in the pressure per unit time of the steam in the steam separator 20 to less than or equal to a certain amount, thereby preventing the occurrence of cavitation. In this manner, the control unit 90 of this embodiment controls the degree of opening of the governor valve 35 so that a fluctuation per unit time in the pressure of the steam output from the pressure transmitter 27 is less than or equal to a predetermined pressure.

Note that the upper limit of the amount of reduction per minute (unit time) in the pressure of the steam in the steam separator 20 is preferably, for example, 0.1 kg/cm².

As shown in Fig. 2, with an increase in the output of the diesel main engine 100, the control unit 90 keeps the amount of increase per minute (unit time) in the degree of opening less than or equal to a certain amount, while gradually increasing the degree of opening of the governor valve 35. In the example shown in Fig. 2, when the output of the diesel main engine 100 exceeds 55%, the control unit 90 controls the degree of opening of the governor valve 35 so that its degree of opening is 100% at which it is fully opened.

The reason why the governor valve 35 is fully opened when the output of the diesel main engine 100 exceeds 55% is to eliminate the throttle loss generated when the degree of opening of the governor valve 35 is less than 100%. In general, an operation performed while the governor valve 35 is fully opened in order to eliminate a throttle loss is referred to as a variable pressure operation. In the variable pressure operation, the pressure of the superheated steam flowing into the steam turbine 30 changes according to the output of the diesel main engine 100 when the output of the diesel main engine 100 exceeds a certain output (for example, 55%).

Next, a process for setting the set pressure Ps for the steam dump valve 60 executed by the control unit 90 shown in Fig. 1 will be described with reference to the flowchart of Fig. 3 and FIGS. 4 and 5.

In Step S301, the control unit 90 determines whether the frequency of electric power generated by the generator 40 has reached the system frequency of the inboard electrical power system 400 and the circuit breaker 80 has been switched from the off-state to the on-state. When the control unit 90 determines that the circuit breaker 80 is in the on-state (YES in Step S301), the process proceeds to Step S302. When the circuit breaker 80 is in the on-state, the governor valve 35 is opened and the start-up of the steam turbine 30 is started.

In Step S302, the control unit 90 determines whether the steam dump valve 60 is fully closed. When the control unit 90 determines that the steam dump valve 60 is fully closed (YES in Step S302), the process proceeds to Step S303. When the steam dump valve 60 is fully closed, the governor valve 35 is opened and the pressure of the steam in the steam separator 20 is less than the set pressure for the steam dump valve 60.

In Step S303, the control unit 90 determines that the steam turbine 30 is in operation because the circuit breaker 80 is in the on-state and the steam dump valve 60 is fully closed. The control unit 90 sets the set pressure Ps for the steam dump valve 60 according to the operation mode.

In Step S304, the control unit 90 determines that the steam turbine 30 is stopped because the circuit breaker 80 is in the off-state or the steam dump valve 60 is opened. The control unit 90 sets the set pressure Ps for the steam dump valve 60 according to the stop mode.

Note that when the circuit breaker 80 is switched from the on-state to the off-state upon the emergency stop of the steam turbine 30, the control unit 90 gives NO in step S301 and switches the operation mode to the stop mode. In other words, the control unit 90 triggers switching from a mode for controlling the opening/closing state of the steam dump valve 60 according to the set pressure Ps2 and the actual steam pressure Pa shown in Fig. 5, to a mode for controlling the opening/closing state of the steam dump valve 60 according to the set pressure Ps1 and the design steam pressure Pd shown in Fig. 4.

The operation mode and the stop mode in which the control unit 90 sets the set pressure Ps will now be described.

First, the stop mode will be described with reference to Fig. 4.

The pressure indicated by the solid line in Fig. 4 (hereinafter referred to as "set pressure Ps1") is the set pressure for the steam dump valve 60 set by the control unit 90 in the stop mode. The pressure indicated by the dash-dot line in Fig. 4 (hereinafter referred to as "design steam pressure Pd") is an example pressure obtained from table information showing a correspondence between the output of the diesel main engine 100 and the design steam pressure Pd that varies according to the output. The pressure indicated by the two-dot chain line in Fig. 4 (hereinafter referred to as "set pressure Pref") is a comparative example of the set pressure for the steam dump valve 60. In the comparative example shown in Fig. 4, the set pressure at which the steam dump valve 60 is opened is set to a constant value independently of the output of the diesel main engine 100.

Note that the set pressure Pref is a pressure value P3 which is sufficiently higher than the design steam pressure Pd observed when the output of the diesel main engine 100 is 100%. This is aimed at setting the set pressure Pref to the pressure value P3, which is sufficiently higher than the design steam pressure Pd observed when the waste heat recovery unit 300 is in the normal operation, thereby preventing steam from flowing out of the steam dump valve 60 during the normal operation of the waste heat recovery unit 300. This is based on the design concept that steam is not wasted unless an abnormality (a rapid increase in steam pressure) occurs in the waste heat recovery unit 300. This conventional design concept is that the steam guided from the steam separator is not guided to a condenser or the like, and the whole amount of steam is used as inboard chore steam or the like.

Here, the design steam pressure Pd is a pressure obtained from table information showing a correspondence between the output of the diesel main engine 100 and the design steam pressure Pd that varies according to the output. This table information is information correlating the output of the diesel main engine 100 measured in advance under certain environmental conditions, with the pressure of the steam in the steam separator 20 obtained with that output. The table information is prestored in a storage (not shown in the drawing) in the control unit 90.

As shown in Fig. 4, the set pressure Ps1, which is set by the control unit 90 for the steam dump valve 60 while the steam turbine 30 is stopped, is a pressure (second pressure) obtained by adding a constant pressure Pc to the design steam pressure (first pressure) Pd. In the example shown in Fig. 4, regardless of the value of the output of the diesel main engine 100, the set pressure Ps1 is supposed to be the pressure obtained by constantly adding the constant pressure Pc to the design steam pressure Pd.

A difference between the case where the control unit 90 sets the set pressure Pref and the case where the control unit 90 sets the set pressure Ps1 will now be described. Here, the case where the steam turbine 30 is actuated in response to the fact that the output of the diesel main engine 100 reaches 55% will be described as an example.

When the control unit 90 sets the set pressure Pref, the fully closed governor valve 35 starts to be opened after the output of the diesel main engine 100 reaches 55%, and the pressure value P3 is supposed to be the pressure of the steam in the steam separator 20 at this time. Accordingly, the time required for switching the governor valve 35 from the fully closed state to the fully opened state in order to prevent the occurrence of cavitation is (P3-P1)/Pdif (min) when the amount of reduction per minute (unit time) in the pressure of the steam in the steam separator 20 is Pdif (kg/cm²). Here, P1 is the pressure value of the design steam pressure Pd observed when the output of the diesel main engine 100 is 55%.

On the other hand, when the control unit 90 sets the set pressure Ps1, the fully closed governor valve 35 starts to be opened after the output of the diesel main engine 100 reaches 55%, and the pressure value P2 is supposed to be the pressure of the steam in the steam separator 20 at this time. This is because, as shown in Fig. 5, the set pressure Ps1 observed when the output of the diesel main engine 100 is 55% is the pressure value P2.

Accordingly, the time required for switching the governor valve 35 from the fully closed state to the fully opened state in order to prevent the occurrence of cavitation is (P2-P1)/Pdif (min) when the amount of reduction per minute (unit time) in the pressure of the steam in the steam separator 20 is Pdif (kg/cm²).

Thus, the time required for switching the governor valve 35 from the fully closed state to the fully opened state when the control unit 90 sets the set pressure Pref is (P3-Pl)/Pdif (min). On the other hand, the time required for switching the governor valve 35 from the fully closed state to the fully opened state when the control unit 90 sets the set pressure Ps1 is (P2-P1)/Pdif (min). Hence, when the control unit 90 sets the set pressure Ps1, the time required for switching the governor valve 35 from the fully closed state to the fully opened state is shorter by (P3-P2)/Pdif (min).

Although the set pressure Ps1 is supposed to be the pressure obtained by constantly adding the constant pressure Pc to the design steam pressure Pd regardless of the value of the output of the diesel main engine 100 in the example shown in Fig. 4, another aspect may be employed. For example, the set pressure Ps1 may be set to the value of the design steam pressure Pd.

Further, for example, the pressure to be added to the design steam pressure Pd may be varied according to the value of the output of the diesel main engine 100. In this case, the pressure to be added to the design steam pressure Pd is set in the range of 0 to the constant pressure Pc. In other words, the control unit 90 may set the set pressure Ps1, which varies according to the design steam pressure Pd, to a value higher than or equal to the design steam pressure Pd and less than or equal to the pressure obtained by adding the constant pressure Pc to the design steam pressure Pd.

Note that setting the constant pressure Pc to an appropriate value larger than 0 allows the value of the design steam pressure Pd and the value of the set pressure Ps1 to be equal or close, thereby suppressing the trouble of a hunting phenomenon (a vibration phenomenon in which the steam dump valve 60 repeats opening and closing).

Next, the operation mode will be described with reference to Fig. 5.

The operation mode set by the control unit 90 is a mode in which the set pressure Ps is set for the steam dump valve 60 during operation of the steam turbine 30.

The pressure indicated by the solid line in Fig. 5 (hereinafter referred to as "set pressure Ps2") is the set pressure for the steam dump valve 60 set by the control unit 90 in the operation mode. The pressure indicated by the dash-dot line in Fig. 5 (hereinafter referred to as "actual steam pressure Pa") is an example of the pressure output from the pressure transmitter 27 to the control unit 90. The pressure indicated by the two-dot chain line in Fig. 5 (hereinafter referred to as "set pressure Pref") is a comparative example of the set pressure for the steam dump valve 60. The comparative example shown in Fig. 5 is the same as the comparative example shown in Fig. 4.

Note that the set pressure Pref is the pressure value P3 which is sufficiently higher than the actual steam pressure Pa observed when the output of the diesel main engine 100 is 100%. This is aimed at setting the set pressure Pref to the pressure value P3, which is sufficiently higher than the actual steam pressure Pa observed when the waste heat recovery unit 300 is in the normal operation, thereby preventing steam from flowing out of the steam dump valve 60 during the normal operation of the waste heat recovery unit 300. This is based on the design concept that steam is not wasted unless an abnormality (a rapid increase in steam pressure) occurs in the waste heat recovery unit 300.

As shown in Fig. 5, the set pressure Ps2, which is set by the control unit 90 for the steam dump valve 60 while the steam turbine 30 is in operation, is a pressure (second pressure) obtained by adding the constant pressure Pc to the actual steam pressure (first pressure) Pa. In the example shown in Fig. 5, regardless of the value of the output of the diesel main engine 100, the set pressure Ps2 is supposed to be the pressure obtained by constantly adding the constant pressure Pc to the actual steam pressure Pa.

Note that, according to the above description, the control unit 90 sets the set pressure Ps2 to the pressure obtained by adding the constant pressure Pc to the actual steam pressure Pa. Here, it is assumed that the control unit 90 does not update the set pressure Ps2 for at least a certain period of time. This is aimed at avoiding the trouble that excess steam is not exhausted through the steam dump valve 60, by updating the set pressure Ps2 in real time so that the set pressure Ps2 rapidly increases with a rapid increase in the actual steam pressure Pa.

Although the set pressure Ps2 is supposed to be the pressure obtained by constantly adding the constant pressure Pc to the actual steam pressure Pa regardless of the value of the output of the diesel main engine 100 in the example shown in Fig. 5, another aspect may be employed.

For example, the set pressure Ps2 may be set to the value of the actual steam pressure Pa.

Further, for example, the pressure to be added to the actual steam pressure Pa may be varied according to the value of the output of the diesel main engine 100. In this case, the pressure to be added to the actual steam pressure Pa is set in the range of 0 to the constant pressure Pc. In other words, the control unit 90 may set the set pressure Ps2, which varies according to the actual steam pressure Pa, to a value greater than or equal to the actual steam pressure Pa and less than or equal to the pressure obtained by adding the constant pressure Pc to the actual steam pressure Pa.

Note that setting the constant pressure Pc to an appropriate value larger than 0 allows the value of the actual steam pressure Pa and the value of the set pressure Ps2 to be equal or close, thereby suppressing the trouble of a hunting phenomenon (a vibration phenomenon in which the steam dump valve 60 repeats opening and closing).

Note that the pressure values P1, P2, and P3 that have been described with reference to FIGS. 4 and 5 are, for example, P1 = 5.5 (kg/cm²), P2 = 7.0 (kg/cm²), and P3 = 13.0 (kg/cm²). The constant pressure Pc may be an arbitrary value (for example, 1.5 (kg/cm²)) within the range of less than or equal to 2.5 (kg/cm²). Note that the value of 1.5 (kg/cm²) is an example value that can reliably suppress the trouble of a hunting phenomenon.

The acts and effects of the above-described embodiment will now be described.

In the waste heat recovery unit 300 of this embodiment, the pressure of the steam (main steam) in the steam separator 20 is kept equal to the design steam pressure Pd, which is obtained by the control unit 90 from the table information, equal to the actual steam pressure Pa output from the pressure transmitter 27, or in a range of less than or equal to the pressure (second pressure) to which the constant pressure Pc is added. The pressure of the steam in the steam separator 20 varies according to the output of the diesel main engine 100, and the control unit 90 appropriately sets the set pressures Ps1 and Ps2 for the steam dump valve 60 according to the pressure of the steam in the steam separator 20. Accordingly, the pressure of the steam in the steam separator 20 is kept within an appropriate range according to the output of the diesel main engine 100. Consequently, a phenomenon in which the pressure of the steam in the steam separator 20 is kept high with respect to the output of the diesel main engine 100 is prevented unlike in the case where the set pressures Ps1 and Ps2 for the steam dump valve 60 are set to constant values independently of the output of the diesel main engine 100. Hence, the start-up time of the steam turbine 30 can be shortened even in the case where the degree of opening of the governor valve 35 is controlled so that a fluctuation per unit time in the pressure of the steam in the steam separator 20 is less than or equal to a predetermined pressure.

In the waste heat recovery unit 300 of this embodiment, the control unit 90 controls the degree of opening of the governor valve 35 so that a fluctuation per unit time in the pressure of the steam in the steam separator 20 is less than or equal to a predetermined pressure.

Thus, a fluctuation per unit time in the pressure of the steam in the steam separator 20 becomes less than or equal to a predetermined pressure, so that the pressure of water in the steam separator 20 is kept at a temperature greater than or equal to the saturated vapor pressure depending on the temperature of the water, thereby suppressing the occurrence of cavitation.

In addition, the internal combustion engine system of this embodiment includes the diesel main engine 100 and the above-described waste heat recovery unit 300.

In the provided internal combustion engine system, which includes the above-described waste heat recovery unit 300, the start-up time of the steam turbine 30 can be shortened even in the case where the degree of opening of the governor valve 35 is controlled so that a fluctuation per unit time in the pressure of the steam in the steam separator 20 is less than or equal to a predetermined pressure.

In addition, a ship of this embodiment includes the above-described internal combustion engine system.

In the ship, which includes the above-described internal combustion engine system, the start-up time of the steam turbine 30 can be shortened even in the case where the degree of opening of the governor valve 35 is controlled so that a fluctuation per unit time in the pressure of the steam in the steam separator 20 is less than or equal to a predetermined pressure.

### [Reference Signs List]

- 10: exhaust gas economizer
- 20: steam separator
- 25: boiler water re-circulation pump
- 27: pressure transmitter (output unit)
- 30: steam turbine
- 35: governor valve (regulating valve)
- 40: generator
- 50: condenser
- 55: condensate pump
- 60: steam dump valve
- 70: pressure control valve for service steam
- 80: circuit breaker
- 90: control unit
- 100: diesel main engine (internal combustion engine)
- 200: turbocharger
- 300: waste heat recovery unit
- 400: inboard electrical power system
- L1: exhaust gas pipe
- L2: superheated steam supply pipe
- L3: steam pipe
- Pa: actual steam pressure
- Pd: design steam pressure
- Ps1, Ps2: set pressure

## Claims

1. A waste heat recovery unit comprising:
a steam separator (20) to which main steam generated by recovering heat from exhaust gas exhausted from an internal combustion engine (100) is guided;
a steam turbine (30) that is driven by the main steam guided from the steam separator (120);
a regulating valve (35) that regulates flow rate of the main steam flowing from the steam separator (20) to the steam turbine (30);
a steam dump valve (60) that is connected to the steam separator (20);
an output unit (27) that outputs a first pressure that is the pressure of the main steam in the steam separator (20); and
a control unit (90) that controls the steam dump valve (60) so that the steam dump valve (60) is opened when the pressure of the main steam output by the output unit (27) is greater than or equal to a set pressure, and the steam dump valve (60) is closed when the pressure of the main steam output by the output unit (27) is less than the set pressure,
**characterized in that**
the control unit (90) is configured to control a degree of opening of the regulating valve (35) so that a fluctuation per unit time in the pressure of the main steam is less than or equal to a predetermined pressure, and
the control unit (90) is configured to set the set pressure to a value greater than or equal to the first pressure and less than or equal to a second pressure obtained by adding a constant pressure to the first pressure, the set pressure varying according to the first pressure.

2. The waste heat recovery unit according to Claim 1, wherein the output unit is a pressure transmitter that detects the pressure of the main steam.

3. The waste heat recovery unit according to Claim 1, wherein the output unit (27) outputs, based on table information showing a correspondence between an output of the internal combustion engine (100) and a design steam pressure that varies according to the output, the design steam pressure corresponding to the output of the internal combustion engine (100) as the first pressure.

4. An internal combustion engine system comprising:
the internal combustion engine (100); and
the waste heat recovery unit (300) according to any one of Claims 1 to 3.

5. A ship comprising the internal combustion engine system according to Claim 4.

6. A method of controlling a waste heat recovery unit including a steam turbine (30) driven by main steam generated by recovering heat from exhaust gas exhausted from an internal combustion engine (100), the method comprising the steps of:
an output step of outputting a first pressure that is the pressure of the main steam guided to a steam separator (20); and
a control step of controlling a steam dump valve (60) connected to the steam separator (20) so that the steam dump valve (60) is opened when the pressure of the main steam output in the output step is greater than or equal to a set pressure, and the steam dump valve is closed when the pressure of the main steam output in the output step is less than the set pressure,
**characterized in that**
the control step is configured to control a degree of opening of the regulating valve (35) so that a fluctuation per unit time in the pressure of the main steam is less than or equal to a predetermined pressure, and
the control step is configured to set the set pressure to a value greater than or equal to the first pressure and less than or equal to a second pressure obtained by adding a constant pressure to the first pressure, the set pressure varying according to the first pressure.

## Patentansprüche

1. Abhitzerückgewinnungseinheit, umfassend:
einen Dampfabscheider (20), zu dem Hauptdampf, der durch Rückgewinnung von Hitze aus Abgas erzeugt wird, das aus einer Brennkraftmaschine (100) ausgelassen wird, geführt wird;
eine Dampfturbine (30), die von dem Hauptdampf, der von dem Dampfabscheider (120) geführt wird, angetrieben ist;
ein Regelventil (35), das die Flussrate des Hauptdampfs, der von dem Dampfabscheider (20) zu der Dampfturbine (30) fließt, regelt;
ein Dampfschnellablassventil (60), das mit dem Dampfabscheider (20) verbunden ist;
eine Ausgabeeinheit (27), die einen ersten Druck ausgibt, der der Druck des Hauptdampfs in dem Dampfabscheider (20) ist; und
eine Steuereinheit (90), die das Dampfschnellablassventil (60) derart steuert, dass das Dampfschnellablassventil (60) geöffnet wird, wenn der Druck des Hauptdampfs, der von der Ausgabeeinheit (27) ausgegeben wird, größer oder gleich einem Einstelldruck ist, und das Dampfschnellablassventil (60) geschlossen wird, wenn der Druck des Hauptdampfs, der von der Ausgabeeinheit (27) ausgegeben wird, niedriger ist als der Einstelldruck,
**dadurch gekennzeichnet, dass**
die Steuereinheit (90) konfiguriert ist, um einen Öffnungsgrad des Regelventils (35) derart zu steuern, dass eine Schwankung pro Zeiteinheit des Drucks des Hauptdampfs kleiner oder gleich ist wie ein vorbestimmter Druck, und
die Steuereinheit (90) konfiguriert ist, um den Einstelldruck auf einen Wert einzustellen, der größer oder gleich dem ersten Druck ist, und kleiner oder gleich einem zweiten Druck ist, der durch Hinzufügen eines konstanten Drucks zu dem ersten Druck erhalten wird, wobei der Einstelldruck gemäß dem ersten Druck variiert.

2. Abhitzerückgewinnungseinheit nach Anspruch 1, wobei die Ausgabeeinheit ein Druckgeber ist, der den Druck des Hauptdampfs erfasst.

3. Abhitzerückgewinnungseinheit nach Anspruch 1, wobei die Ausgabeeinheit (27) basierend auf Tabelleninformation, die eine Entsprechung zwischen einer Ausgabe der Brennkraftmaschine (100) und einem Konzeptionsdampfdruck, der gemäß der Ausgabe variiert, zeigt, wobei der Konzeptionsdampfdruck der Ausgabe der Brennkraftmaschine (100) als der erste Druck entspricht.

4. Brennkraftmaschinensystem, umfassend:
die Brennkraftmaschine (100); und
die Abhitzerückgewinnungseinheit (300) nach einem der Ansprüche 1 bis 3.

5. Schiff, das die Brennkraftmaschine nach Anspruch 4 umfasst.

6. Verfahren zum Steuern einer Abhitzerückgewinnungseinheit, die eine Dampfturbine (30) beinhaltet, die von einem Hauptdampf angetrieben wird, der durch Rückgewinnen von Hitze aus Abgas, das aus einer Brennkraftmaschine (100) abgelassen wird, erzeugt wird, wobei das Verfahren die folgenden Schritte umfasst:
einen Ausgabeschritt des Ausgebens eines ersten Drucks, der der Druck des Hauptdampfs ist, der zu einem Dampfabscheider (20) geführt wird; und
einen Steuerschritt des Steuerns eines Dampfschnellablassventils (60), das mit dem Dampfabscheider (20) derart verbunden ist, dass das Dampfschnellablassventil (60) geöffnet wird, wenn der Druck des Hauptdampfs, der bei dem Ausgabeschritt ausgegeben wird, größer oder gleich einem Einstelldruck ist, und das Dampfschnellablassventil geschlossen wird, wenn der Druck des Hauptdampfs, der bei dem Ausgabeschritt ausgegeben wird, kleiner ist als der Einstelldruck,
**dadurch gekennzeichnet, dass**
der Steuerschritt konfiguriert ist, um einen Öffnungsgrad des Regelventils (35) derart zu steuern, dass eine Schwankung pro Zeiteinheit des Drucks des Hauptdampfs kleiner oder gleich einem vorbestimmten Druck ist, und
der Steuerschritt konfiguriert ist, um den Einstelldruck auf einen Wert einzustellen, der größer oder gleich dem ersten Druck und kleiner oder gleich einem zweiten Druck ist, der durch Hinzufügen eines konstanten Drucks zu dem ersten Druck erhalten wird, wobei der Einstelldruck gemäß dem ersten Druck variiert.

## Revendications

1. Unité de récupération de chaleur perdue comprenant :
un séparateur de vapeur (20) vers lequel une vapeur primaire générée par la récupération de chaleur depuis des gaz d'échappement évacués depuis un moteur à combustion interne (100) est guidée ;
une turbine à vapeur (30) qui est entraînée par la vapeur primaire guidée depuis le séparateur de vapeur (120) ;
une soupape de réglage (35) qui règle le débit de la vapeur primaire s'écoulant entre le séparateur de vapeur (20) et la turbine à vapeur (30) ;
une soupape de décharge de vapeur (60) qui est connectée au séparateur de vapeur(20) ;
une unité de production (27) qui produit une première pression qui est la pression de la vapeur primaire dans le séparateur de vapeur (20) : et
une unité de commande (90) qui commande la soupape de décharge de vapeur (60) de telle sorte que la soupape de décharge de vapeur (60) est ouverte lorsque la pression de la vapeur primaire produite par l'unité de production (27) est supérieure ou égale à une pression définie, et que la soupape de décharge de vapeur (60) est fermée lorsque la pression de la vapeur primaire produite par l'unité de production (27) est inférieure à la pression définie,
**caractérisée en ce que**
l'unité de commande (90) est configurée pour commander un degré d'ouverture de la soupape de réglage (35) de telle sorte qu'une fluctuation par unité de temps dans la pression de la vapeur primaire est inférieure ou égale à une pression prédéterminée, et
l'unité de commande (90) est configurée pour définir la pression définie à une valeur supérieure ou égale à la première pression et inférieure ou égale à une seconde pression obtenue en ajoutant une pression constante à la première pression, la pression définie variant en fonction de la première pression.

2. Unité de récupération de chaleur perdue selon la revendication 1, dans laquelle l'unité de production est un émetteur de pression qui détecte la pression de la vapeur primaire.

3. Unité de récupération de chaleur perdue selon la revendication 1, dans laquelle l'unité de production (27) produit, sur la base d'informations de table indiquant une correspondance entre une sortie du moteur de combustion interne (100) et une pression de vapeur modélisée qui varie en fonction de la sortie, la pression de vapeur modélisée correspondant à la sortie du moteur de combustion interne (100) sous forme de la première pression.

4. Système de moteur à combustion interne comprenant :
le moteur à combustion interne (100) ; et
l'unité de récupération de chaleur perdue (300) selon l'une quelconque des revendications 1 à 3.

5. Navire comprenant le système de moteur à combustion interne selon la revendication 4.

6. Procédé de commande d'une unité de récupération de chaleur perdue comprenant une turbine à vapeur (30) entraînée par la vapeur primaire générée en récupérant de la chaleur depuis des gaz d'échappement évacués depuis un moteur à combustion interne (100), le procédé comprenant les étapes suivantes :
une étape de production consistant à produire une première pression qui est la pression de la vapeur primaire guidée vers un séparateur de vapeur (20) ; et
une étape de commande consistant à commander une soupape de décharge de vapeur (60) connectée au séparateur de vapeur (20) de telle sorte que la soupape de décharge de vapeur (60) est ouverte lorsque la pression de la vapeur primaire produite à l'étape de production est supérieure ou égale à une pression définie, et que la soupape de décharge de vapeur est fermée lorsque la pression de la vapeur primaire produite à l'étape de production est inférieure à la pression définie,
**caractérisé en ce que**
l'étape de commande est configurée pour commander un degré d'ouverture de la soupape de réglage (35) de telle sorte qu'une fluctuation par unité de temps dans la pression de la vapeur primaire est inférieure ou égale à une pression prédéterminée, et
l'étape de commande est configurée pour définir la pression définie à une valeur supérieure ou égale à la première pression et inférieure ou égale à une seconde pression obtenue en ajoutant une pression constante à la première pression, la pression définie variant en fonction de la première pression.
